# EUROPEAN PATENT SPECIFICATION

(11) **EP 3 536 574 B1**
(45) Date of publication and mention of the grant of the patent: **03.12.2025**
(21) Application number: 18382137.0
(22) Date of filing: 06.03.2018
(51) Int. Cl.: B60W 50/00, G08G 1/0967, B60T 8/172, B60W 40/068

(54) **VEHICLE CONTROL SYSTEM**
FAHRZEUGSTEUERUNGSSYSTEM
SYSTÈME DE COMMANDE DE VÉHICULE

(43) Date of publication of application: 11.09.2019
(73) Proprietor: Alvarez Troncoso, Pablo, 12560 Benicasim, Castellón (ES); Alvarez Troncoso, Ignacio, 91370 Verrieres le Buisson (FR)
(72) Inventor: Alvarez Troncoso, Pablo, 12560 Benicasim, Castellón (ES); Alvarez Troncoso, Ignacio, 91370 Verrieres le Buisson (FR)
(74) Representative: Durán-Corretjer, S.L.P.

(56) References cited:
- EP-A1- 1 245 626
- EP-A1- 1 495 904
- WO-A1-2014/189059
- WO-A1-2017/105343
- WO-A2-2008/092003
- GB-A- 2 499 252
- KR-A- 20100 008 803
- US-A- 5 483 453
- US-A- 5 652 522
- US-A1- 2002 121 132
- US-A1- 2006 293 841
- US-A1- 2015 260 614
- US-A1- 2016 185 219

## Description

The present invention relates to a novel system for controlling a vehicle.

In today's society, the use of vehicles for transporting merchandise and people is widespread, both in the public sector and in the private sector. Due to the large number of vehicles on the roads, a large number of accidents occur which entail significant personal and economic loss.

Currently, numerous public and private institutions, as well as vehicle manufacturers, promote the introduction of measures to decrease the number of traffic accidents and the seriousness thereof should they occur. However, the way in which the problem is approached usually deals with the roads and vehicles separately, i.e. on the one hand, competent bodies carry out improvements to the road network and on the other hand vehicle manufacturers increase the active and passive safety of the vehicles they produce, but, in general, there is no form of interaction between the vehicle and the road.

The published American patent application document US 2016/0137208 A1 discloses a method and a system for predicting the performance of a vehicle for a segment of road depending on an estimated wheel slip value. As described in this document, by means of sensors in the vehicle, the coefficient of friction and slip ratio are estimated and said estimated value is used as an input for an algorithm which, by comparing said estimated value with a library of values containing coefficient of friction values for similar vehicles, vehicles having similar wheels, vehicles of a similar age, etc., is capable of predicting the vehicle slip ratio in upcoming road sections, thus making it possible to alert the driver when the estimated value of the slip ratio for the following road sections exceeds a predetermined threshold. The system disclosed by this document is also capable of receiving reports on the state of the surface of the road derived from estimates made by other vehicles on one or more roads, in order to identify the information available on upcoming road sections and to send said information to the vehicle in question once said information has been processed.

The published American patent application document US 2011/0012753 A1 discloses methods, systems and computer-readable means for informing vehicles of particular environmental conditions before said vehicles are confronted with said environmental conditions. According to said document, the environmental conditions are detected by means of sensors in the vehicles. Said sensors may monitor vehicle systems and also meteorological conditions. The local environmental data are used to determine if there are specific environmental conditions or dangers in the geographic location of the vehicle. If this is the case, a notification is sent to the vehicles in the vicinity of the specific environmental condition or danger with a view to preventing a possible accident.

The published American patent application document US 2010/0245123 A1 discloses a method and a system for detecting slip conditions between the wheel of a vehicle and the surface of a road, processing contemporary vehicle data, such as torque or brake pressure applied, in order to determine a frictional force and calculate a coefficient of friction. The coefficient of friction and the slip location are broadcast to other vehicles driving in the proximity of the slip. The broadcasts can be used to notify drivers of the slippery driving conditions in the current location or ahead of the vehicle, and/or to limit torque and braking pressure applied to the wheels of the vehicle in order to enhance traction and avoid slip.

The published American patent application document US 2016/0176408 A1 discloses a method, an apparatus and a system for determining friction data for at least one section of the surface of the road by means of sensors and/or a guideline friction map in order to prompt at least once response action. According to said document, by means of sensors in the vehicles, vehicle-road friction values are determined and a map showing friction values for different sections of different roads is generated. By comparing the change in friction in the road section with the friction value in the guideline friction map, the system is able to determine a response action. Preferably, the system disclosed in US 2016/0176408 A1 is intended for use in autonomous vehicles or in vehicles having a high degree of driver assistance. Preferably, the response action based on the changes in friction in a given section of road, in the case where a pre-established threshold is surpassed, consists in switching from the autonomous driving mode to the manual driving mode of the vehicle.

US 2006/0293841 A1 discloses a communication device coupled to a first vehicle traveling on a road configured to receive information transmitted by a second vehicle traveling on the road, said information identifying road surface conditions experienced by said second vehicle, and a controller configured to adjust a vehicle operating parameter of the first vehicle in response to receiving said transmitted information from said second vehicle.

EP 1495904 A1 discloses a road-surface friction coefficient estimating device and a road-surface friction coefficient estimating method.

US 2002/121132 A1 discloses a wireless sensing and communication system including sensors located on the vehicle or in the vicinity of the vehicle and which provide information which is transmitted to one or more interrogators in the vehicle using wireless radio frequency transmission technology. The sensors provide information about the vehicle and its interior or exterior environment, about individual components, systems, vehicle occupants, subsystems, or about the roadway, ambient atmosphere, travel conditions and external objects.

WO 2008/092003 A2, GB 2499252 A, US 5483453 A, and WO 2014/189059 A1 also belong to the background art concerning the claimed invention.

A common problem in systems of the prior art is that the state of the surface of the road is estimated using sensors in the vehicles, and although said estimates can be quite accurate, they continue to be non-standardised estimates. Using the system of the present invention, the operating parameters of the vehicle are modified based on real and standardised data on the state of the road surface, which increases the accuracy and robustness of the system. For this purpose, the present invention discloses a vehicle control system that comprises a smart cell capable of storing and transmitting information on the state of the road surface and a control module comprised in a vehicle, the control module modifying the operating parameters of said vehicle based on the information transmitted by the smart cell.

The vehicle control system is defined according to claim 1. Additionally, the vehicle control system is further defined in the dependent claims.

Another advantage of the present invention is that, on account of the use of standardised parameters on the state of the road, it is possible for the data to be directly comparable between different roads, or different sections thereof, and to evaluate the evolution of the state of the road surface over time.

The information on the state of the road surface comprises the coefficient of transverse friction (CTF), the International Roughness Index (IRI) and/or the International Friction Index (IFI).

The values for the coefficient of transverse friction (CTF) and the International Roughness Index (IRI) are standardised values, and for example, in Spain, are governed by the standards UNE 41201:2010 IN (successor to NLT-336/92) and NLT-330/98, respectively, which are monitored and/or developed by the Spanish Standardisation and Certification Association (Asociación Española de Normalización y Certificación, or AENOR) and the Centre for Public Works Studies and Experimentation (Centro de Estudios de Experimentación de Obras Públicas, or CEDEX) at the request of the General Directorate for Roads (Dirección General de Carreteras) of the Ministry of Public Works (Ministerio de Fomento), respectively. Measuring both values is necessary for the acceptance of a road when a new one is being constructed or maintenance work is being carried out on the wearing course of existing roads, and both values are measured again during periodic auscultation and maintenance campaigns of the road network. The International Friction Index (IFI) values are also standardised values and are governed by the standard ASTM E 1960-07 (2015) developed by the American Society for Testing and Materials, or equivalent.

In one embodiment, the smart cell capable of storing and transmitting information on the state of the road surface is located at a fixed point with respect to said road surface. Preferably, said smart cell is embedded in the asphalt. Alternatively, said smart cell is arranged close to the wearing course of the road, in locations such as road markings, the roadside, road markers, road signs, etc., and at a distance such that interference or other problems in the transmission of information between the different elements comprised in the system are prevented.

According to another aspect of the present invention, a method for placing at least one smart cell on a road is also disclosed, said method comprising the steps of: laying the asphalt or bituminous mixture, inserting at least one smart cell in the asphalt or bituminous mixture, and compacting the asphalt or bituminous mixture having the at least one smart cell inside. More specifically, the smart cells are advantageously embedded in the road surface during asphalting of the roads. For this purpose, a mechanical insertion arm is advantageously used which inserts the smart cell after laying of the hot mixture and before the compacting step. Alternatively, the smart cell is placed in the road surface during the priming process of the underlying layer. Once the compacting and cooling process of the bituminous mixture or asphalt has completed, the cell remains in a fixed position. This method is defined according to claim 12.

Although the smart cells are preferably embedded in the road surface during the asphalting or re-asphalting process of the road, it is also possible to place said smart cells in existing road surfaces.

According to another aspect of the invention, a method for placing at least one smart cell in a road is disclosed that comprises the steps of: making at least one hole in the road surface, inserting a corresponding smart cell in the hole and covering the at least one hole comprising the smart cell therein with an asphalt mixture. This method is defined according to claim 13. In other words, preferably, a cavity is opened in the road surface by means of a rotary probe and the smart cell is inserted in said cavity, which is subsequently re-covered using mixtures of cold or hot asphalt, depending on availability and the specific circumstances of each case.

Preferably, the smart cells are coated in a material that is resistant to heat (150°C - 200°C approximately), chemicals and mechanical forces, which may arise beneath the road surface. Even more preferably, said coating is made of thermoset plastic.

In one embodiment, the smart cells have substantially two independent operating mechanisms. In a preferred embodiment, the smart cells comprise a structure made of a magnetic material, or the like, that can be recorded or polarised and that is capable of storing information at least on the CTF and IRI values, or the like. The CTF, IRI and/or IFI values for a given road, or section thereof, stored in a smart cell will be the latest available values and will be able to be periodically updated by means of ground or aerial means, for example drones, equipped with an information transmission unit. Preferably, the smart cells comprise a system responsible for supplying them with energy such that they can carry out the transmission of information. For this purpose, piezoelectric materials or other materials are preferably used which are capable of generating electrical impulses as a response to the vibrations or mechanical stresses produced by the vehicles. In a preferred embodiment, the smart cells comprise a passive radiofrequency transmission mechanism that responds to the excitation produced by the control module comprised in the vehicles, in a similar way to the functioning of passive RFID tags.

In one embodiment, the smart cells comprise a transceiver embedded therein which emits and receives electromagnetic waves in accordance with a specific protocol that ensures communication using a bit codification-based encryption algorithm. In one embodiment, the control module comprised in a vehicle and the control unit of a section of road decrypt the information received from the smart cells.

In one embodiment, the system calculates a global safety factor that is a function of the coefficient of friction, the International Roughness Index, the position and the time. In one embodiment, the system calculates a global safety factor that is a function of the coefficient of friction, the International Roughness Index, the International Friction Index, the position and the time. Advantageously, the control module comprised in a vehicle modifies the operating parameters of said vehicle depending on said global safety factor.

In one embodiment, the system additionally comprises a control unit for a section of road. In an advantageous embodiment, the system has a control unit for each of a plurality of road sections.

In one embodiment, the system has a smart cell for each of the road sections.

In one embodiment, the global safety factor is calculated in a smart cell. In this case, the smart cell carrying out said calculation acts as master and the remaining cells, if there are any, act as slaves to the master. In an alternative embodiment, the global safety factor is calculated in a control unit of a section of road. In an alternative embodiment, the global safety factor is calculated in a control module comprised in a vehicle.

In one embodiment, the driver of the vehicle receives a warning when driving on a road section in which the global safety factor, the CTF, IRI and/or IFI indicate a potential hazard to the movement of said vehicle, i.e. when the risk of an accident increases, the driver is notified such that they can act accordingly.

In a preferred embodiment, there is one smart cell and one control unit for each of the road sections, i.e. each road section has one smart cell and one control unit. Given that the characteristics of the surface of a road are not consistent throughout, it is especially advantageous to be able to adapt the behaviour of the vehicle to each section of road. In an even more preferred embodiment, there is one smart cell per road section and per lane of the road. This makes it possible to more accurately know the actual state of the road surface, since in one section of road, different lanes may be in different states of repair, and as a result, have different COF, IRI and/or IFI values, which in turn translates into different global safety factor values.

In an advantageous embodiment, the global safety factor is calculated for each of the sections of road.

In one embodiment, should the case arise, the system notifies the user of the vehicle of the presence of upcoming dangers. That is to say, as well as modifying the operating parameters of the vehicle depending on the state of the road section on which it is driving and the upcoming road sections, the system is also able to notify the driver, co-driver and remaining passengers of the presence of a particular type of imminent danger on the road section on which they are driving or of a particular danger in upcoming road sections.

Advantageously, the control units of the road section are interconnected so as to form a local area network (LAN).

Advantageously, the vehicle comprises a structured network composed of different units that are interconnected by means of, preferably, security gateways that collect information and/or transfer instructions and/or information on the four main domains of sensors, actuators and diagnosis units of the vehicle. Preferably, the four main domains are as follows:
1. Domain unit of the cabin. Preferably, this includes the control and diagnosis of the entire interior of the car, including access to, inter alia, infoentertainment, screens of the central console and of the cabin, control units of the seats and sensors. Said unit holds information on the motors and actuators that position the subsystems of the car (direction, rear-view mirrors, seats, console, etc.) and has the sensors that provide information on the position, temperature, humidity and biometrics of the occupants (eye-blinking, body temperature, heart rate, breathing rate, movements, etc.). Said unit also receives, via a communications port, information on the windscreen wipers, lighting systems and sound systems, control unit for the air-conditioning, airbags, door locks and control units for the windows, and can communicate with a head-up display (HUD) and the connectivity system.
2. Domain unit of the chassis. Preferably, this includes control of the actuators and sensors of the chassis (suspension, braking system, advanced driver assistance systems, radars for detecting pedestrians, active cruise control, etc.). Said unit controls the doors and ensures stability of the vehicle and traction thereof.
3. Domain unit of the kinematic chain. Preferably, this includes control units for managing the engine, for the gear-change system, for supervising the braking performance and the traction profile of the wheels, etc.
4. Telematic and infoentertainment unit. Preferably, this includes an embedded personal computer and telematics (3G, 4G, 5G, Bluetooth, etc.) for sending and receiving information in the vehicle and processing a user interface. Said personal computer includes a warning and monitoring system in which information relating to the state of the road according to expected CTF, IRI and/or IFI and according to a predictive system is displayed, said predictive system being an algorithm which keeps the user of the vehicle up-to-date with regard to, inter alia, the state of the road, state of the car, actions proposed with regard to safety and safety-related information.

Advantageously, the four previously mentioned domains are coordinated via a central gateway that is responsible for linking the information from the domains and coordinating the priorities of the messages between domains, since each of the domains is controlled by the domain controller comprised in each one.

In one embodiment, the local area network can receive, in real time, the data relating to changes and adjustments in the domains of the vehicles caused by unexpected situations and the autonomous decisions of the system for adapting the operation of the vehicle to said unexpected situations. Said data may be processed statistically in order to be able to develop preventative road maintenance strategies. Said statistical processing may be carried out in external servers in embodiments having same.

Preferably, the structured network described above has access to information relating at least to the state of the vehicle, contextual information, the state of the road and the state of the occupants, with a view to calculating the matrix of vectors for supplying the predictive algorithms. Said predictive algorithms comprise a temporal aggregation algorithm, a temporal prediction algorithm and a hypervisor algorithm.

In one embodiment, the control module comprised in a vehicle runs a temporal aggregation algorithm and a temporal prediction algorithm.

In a preferred embodiment, the system additionally comprises an external server that runs a machine learning algorithm based on the historical data for calculating the global safety factor, i.e. said external server runs a hypervisor algorithm which, by means of machine learning based on the historical data, is able to modify the temporal aggregation algorithm and the temporal prediction algorithm. In an even more preferred embodiment, the machine learning algorithm additionally considers the preferences of the occupants and the state of said occupants and of the vehicle.

In one embodiment, the temporal aggregation algorithm gathers the scalar parameter information from the different domains, causing the gateway to search for the information available in the dedicated domain. The vector is aggregated in bit and time series: Vt1 (Da1-1,Da1-2,..., Db1-1,Db1-2,...), Vt2 (Da2-1,Da2-2,....,Db2-1,Db2-2,...), Vtn (Dan-1, Dan-2,...,Dbn-1,Dbn-2,...). Said aggregation algorithm creates a time-based matrix of states for the different domains MDtn (Vt1, Vt2, Vt3,..., Vtn). Preferably, the aggregation matrix is stored in a volatile memory in order to allow subsequent computation and is processed according to a "first-in, first-out" (FIFO) strategy, unless an interruption is detected in a mission critical to security. A mission critical to the security of the matrix is detected in a time-reported overhead, said overhead being a mirror of the diagnosis of the domain and only one domain being below said situation the system interrupts the prediction loop for the degraded programming mode pre-established in the memory of the units, with the aim of maximizing security.

Preferably, the temporal aggregation algorithm is run on the control module embedded in the vehicle. However, other embodiments in which said temporal aggregation algorithm is run on the road-section control unit, the external server, or the smart cell are also possible.

In one embodiment, the temporal prediction algorithm includes a pre-processing unit which filters abnormal noise in the input signals and automatically rejects any processing request that includes a security overhead and reports back to the degraded programming mode, said pre-processing unit being able to inform the local area network of such events for statistical use thereof in preventative maintenance. In one embodiment, the system is also composed of a time series predictor that is preconfigured to conduct standard cycles and that is capable of learning and/or updating itself based on experience, on account of the adaptive capabilities of the algorithm. In one embodiment, said algorithm may be based on recurrent neural networks, such as models used for speech recognition, memories having associated learning processes based on gradients or the like, etc. In one embodiment, the system processes predictions in the following manner: when an input vector arrives, it is supplied to the input neural layer after a pre-processing step that is structured into series so as to accommodate the input of the matrix t1, t2, ..., tn for a given sampling time, generally of 2 to 100 ms, although other sampling times are also possible. Subsequently, the unit calculates the internal transition vectors based on weightings configured to provide, subsequent to recurrent cycles, the output of the series matrix tn+1, tn+2, ...., tn+m with an event probability that is calculated by comparing the output vector with the vector of the learning sequence that is best suited for a given context segmented by cases of use (Ptn= f(matrixout tn, matrixout tn-1, matrixref_use caseout tn, matrixref_use caseout tn+1, matrixref_use caseout tn-1)).

Preferably, the temporal prediction algorithm is run in the road-section control unit. However, other embodiments in which said temporal prediction algorithm is run on the external server, the vehicle control module or the smart cell are also possible.

In one embodiment, the hypervisor algorithm runs deep learning processes in order to classify and learn about behaviours of the end user and response actions based on historical data. Said hypervisor algorithm is an algorithm that is connected to the vectors of the road via road telematics, i.e. to the car information, to the state of the occupants and to the proposed actions. Moreover, said hypervisor algorithm receives the state of the time series and stores data records with a view to learning the effectiveness of the actions taken by the occupant and car for a configuration in a given context and road area. Preferably, said algorithm also creates an anonymised pattern of behaviour that is linked to the performance and characteristics of the vehicle, the context of the conditions of the road and the state of the occupants. Preferably, the effectiveness should be above 80% and, consequently, the hypervisor algorithm requests the temporal prediction algorithm to be recalibrated in the event that it is below said threshold value based on the new perception of the adequate countermeasures, which are parameterised by the domains and vectors seen above.

Preferably, the hypervisor algorithm is run on the external server. However, other embodiments in which said hypervisor algorithm is run on the road-section control unit, vehicle control module or smart cell are also possible.

In one embodiment, the actions to be carried out by the system with a view to anticipating and/or taking countermeasures according to the events predicted based on the previously defined vectors can be classified into at least three large groups:
- warning,
- safety,
- well-being and comfort.

Preferably, the warning actions are based on the predicted matrix of events and the probability thereof. The algorithm housed in a control unit connected to the embedded network receives, as an input, the result of the predictive algorithm and confirms the status of the body in the step tn of the domains. Said algorithm prompts the user interface system of the car (screen, sound, vibration, etc.) to issue warnings and request confirmation from the driver for different actions. The system provides the predicted actions to the units embedded in the different domains with a view to anticipating the next action.

Advantageously, the safety actions are focused on the safety of the occupants of the vehicle and are based on:
- cabin and pre-positioning of the seats;
- suspension and traction with regard to the pre-positioning of the occupants.

In one embodiment, the safety actions based on the cabin and pre-positioning of the seats follow the following steps:
i) The system gathers information coming from the domain controllers about the position of the objects close to the occupants (seat, wheels, console, pedals, etc.). Said position information can be provided by the sensors in the form of an absolute or relative position.
ii) The system receives information on the state of the occupants from the seats and the cabin by means of biometric sensors, said information for example including: heart rate, breathing rate, monitoring the mental effort of the driver and the other occupants, drowsiness, motion sickness, orientation of the occupants in relation to the sphere of safety, etc.
iii) The system has memory of the parameterisation of the safety boundary conditions for each occupant and vehicle, which safety boundary conditions are based on driving cycles and preferences, the state of the occupant and the context, such that the difference with respect to the objective position and current state can be understood.
iv) The system uses the information supplied by the diagnosis systems, the possible state predicted based on the state of the road, etc., in order to provide a response action and at the same time notify the user.
v) The system pretensions or accommodates the passive safety components.
vi) The system pre-positions the seat and the cabin in relation to the parameterised safety boundary conditions of the occupant and sends instructions to the domain controllers to adjust the seat and the other objects inside the vehicle into the position pre-established for that particular context.
vii) The system controls the energy so as to have the power delivery available for a safety action.

In one embodiment, the safety actions based on the suspension and traction with respect to the pre-positioning of the occupants follow the following steps:
i) The system prepares, for said conditions, the suspension and the relative height of the vehicle with respect to the road and the response action, for example loosening the suspension if the occupant is drinking and the IRI is low, tightening the suspension if the driver has selected the sport driving mode and if the CTF, IRI and/or IFI allow this, etc.
ii) The system commits user recovery actions if the predicted state of the road and the contextual conditions show that special attention will have to be paid in order to prevent an accident, for example a road that is poorly or not at all maintained, extremely low temperatures, the vehicle travelling at high speed and the occupants being drowsy. In the case of the example given, the system could initiate massage programmes via pneumatic systems in the seat or produce a vibration in the steering wheel by means of specific actuators, etc. Said actions are carried out by the domain that corresponds to the function.

Preferably, the well-being and comfort actions are intended to prevent motion sickness and to increase comfort by preventing undesirable acceleration profiles.

In one embodiment, the well-being and comfort actions intended to prevent motion sickness follow the following steps:
i) The system seeks and/or monitors the parameterised occupant comfort boundary conditions and prepares the transitions thereof based on the new predicted states.
ii) When the system predicts the onset of motion sickness (by means of biometric analysis, temperature analysis, analysis of the inertia and vibrations detected by the sensors in the seat and/or cabin, prediction of the CTF, IRI and/or IFI of the road surface with respect to the internal accelerations and context for machine learning for recent habitual activities, for example, large meals, etc.) the system implements countermeasures, such as requesting the undivided attention of the driver, introducing cool air into the cabin so as to reduce the temperature thereof, increasing the rate of ventilation, etc.

In one embodiment, the actions for increasing comfort by preventing undesirable acceleration profiles follow the following steps:
i) The system recognises the state of comfort and predicts the difference between the state of comfort and future tendencies and needs of the occupants and proposes countermeasures (positioning the seats so as to mitigate the effects of undesirable centrifugal acceleration or G-forces, etc.).
ii) The system prepares the suspension with a view to preventing states of discomfort, for example, when reading, drinking and/or eating in conditions in which the vehicle operates autonomously.
iii) The system is capable of commanding the domains to create specific internal environments (light, temperature, sound, etc.) based on upcoming events predicted based on road condition reports, the context and state of the occupants, the travel mode selected by the driver or passengers (rough road, "I want to sleep", etc.), etc.

In one embodiment, the vehicle control module additionally considers the state of the occupants and the state of the vehicle in order to modify the operating parameters of the vehicle.

Preferably, the system can be used on roads and/or airport surfaces, such as runways, paved with asphalt or bituminous mixtures. Alternatively, the system can be used in roads paved with concrete, cement, or another type of material suitable for use in the paving of roads.

In this document, "coefficient of transverse friction" (CTF) is understood as defined by the standard UNE 21201:2010 IN developed by the Spanish Standardisation and Certification Association (Asociación Española de Normalización y Certificación, or AENOR), or equivalent standards. In this document, "International Roughness Index" (IRI) is understood as defined by the standard NLT-330/98 developed by the Centre for Public Works Studies and Experimentation (Centro de Estudios de Experimentación de Obras Públicas), or equivalent standards. In this document, "International Friction Index" (IFI) is understood as defined by the standard ASTM E 1960-07 (2015) developed by the American Society of Testing Materials, or equivalent standards. In this document, the terms "control unit of a section of road" and "road-section control unit" are equivalent and interchangeable. In this document, the terms "smart cell capable of storing and transmitting information on the state of the road surface" and "smart cell" are used in an equivalent and interchangeable manner.

To aid understanding, explanatory yet non-limiting drawings are included of an embodiment of the vehicle control system according to the present invention, in which:
- Fig. 1 is a schematic view of a first embodiment of a vehicle control system according to the present invention.
- Fig. 2 is a schematic perspective view of a second embodiment of a vehicle control system according to the present invention.
- Fig. 3 is a schematic perspective view of a third embodiment of a vehicle control system according to the present invention.
- Fig. 4 is a schematic view of a road divided into sections according to the present invention.
- Fig. 5 is a diagram showing the operation of the third embodiment of the vehicle control system according to Fig. 3.
- Fig. 6 is a diagram showing the operation of a fourth embodiment of a vehicle control system according to the present invention.
- Fig. 7 is a schematic elevation view of a first method for placing the smart cells in the surface of a road according to the present invention.
- Fig. 8 is a schematic, partially sectional elevation view of a second method for placing the smart cells in the surface of a road according to the present invention.

In the figures, identical or equivalent elements have been given the same reference numerals.

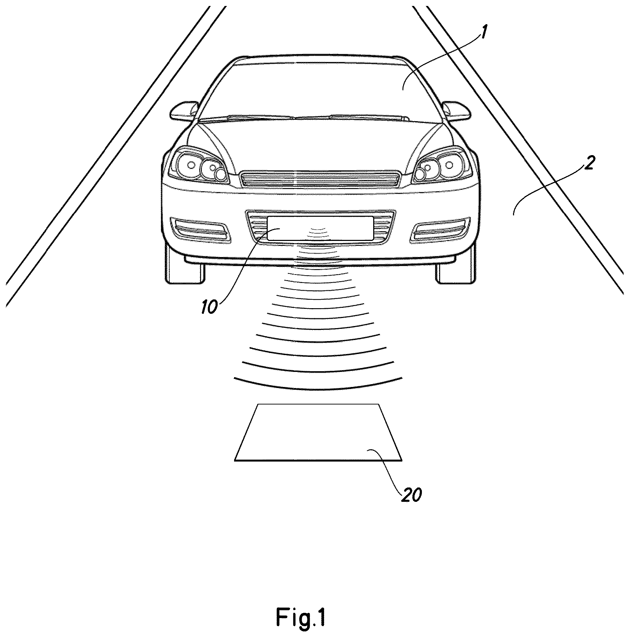

Fig. 1 schematically shows a first embodiment of a vehicle control system according to the present invention. In the embodiment shown in this figure, the smart cell -20- stores the CTF and IRI values of the road -2- and is responsible for calculating the global safety factor and transmitting same to the control module -10- comprised in the vehicle -1- driving on the road -2-. Based on said global safety factor, the control module -10- modifies the operating parameters of said vehicle -1-.

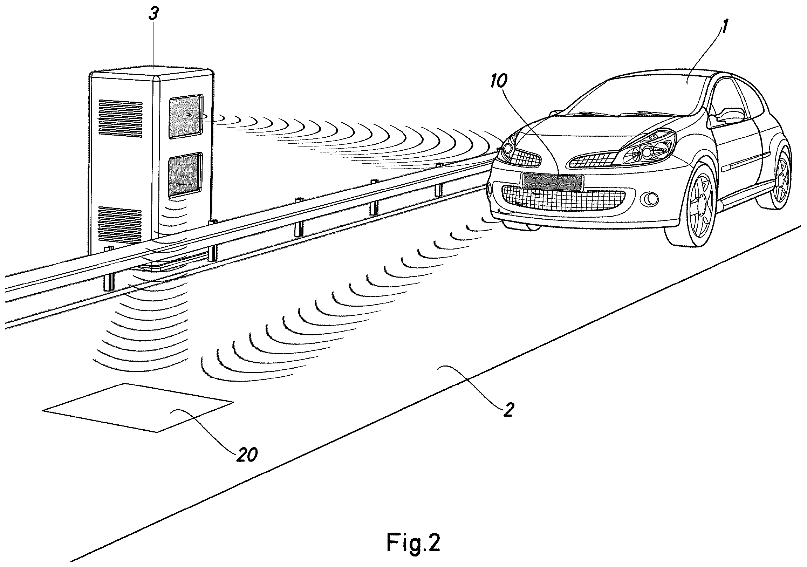

Fig. 2 schematically shows a second embodiment of a vehicle control system according to the present invention. As is easily discernible, the main difference between the first and second embodiment is that the second embodiment additionally comprises a road-section control unit -3-.

In the embodiment shown, the smart cell -20- transmits the information on the state of the road surface, in this case the CTF and IRI, to the road-section control unit -3- and said control unit -3- is responsible for calculating the global safety factor of the road section in which it is located and transmitting said global safety factor to the control module -10- comprised in the vehicle -1-. In said embodiment, the smart cell - 20- is also capable of calculating and transmitting the global safety factor to the control module -10-comprised in the vehicle -1- in the event of failure of the control unit -3-.

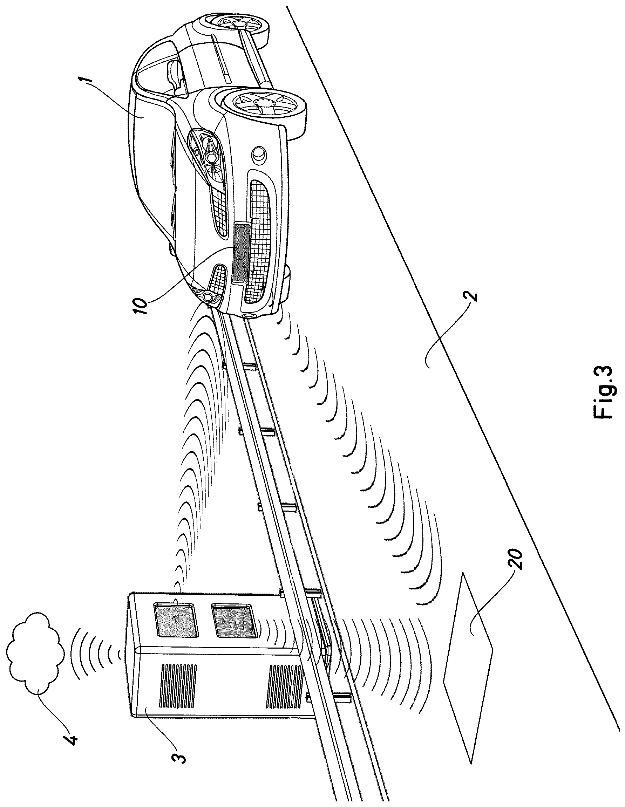

Fig. 3 schematically shows a third embodiment of a vehicle control system according to the present invention. Said third embodiment additionally includes, with respect to the second embodiment shown in Fig. 2, an external server -4- to which the road-section control unit -3- is connected. Said external server -4- is popularly known as cloud. Said external server -4- or cloud runs a machine learning algorithm which, based on the historical data on the state of the road, behaviour of the users, response actions, etc., is capable of recalibrating the temporal prediction algorithm which, in the embodiment shown, is run on the control unit -3-.

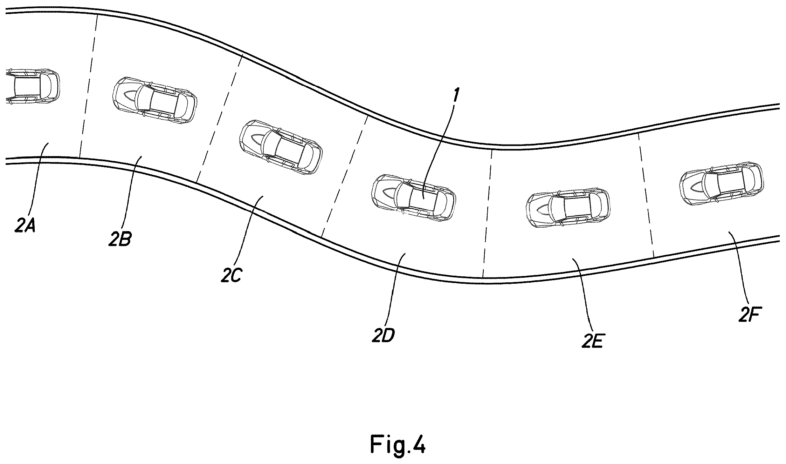

Fig. 4 is a schematic view of a road divided into sections according to the present invention. In this figure, it is possible to see how, when driving on the road, the vehicle -1- traverses the different sections -2A-, -2B-, -2C-, -2D-, -2E-, -2F- of road. For each section, the system calculates a global safety factor such that the operating parameters of the vehicle are modified depending on the state of the road surface in each section. It is important to note that, in the present invention, the data on the state of the road surface are real, not estimated, and standardised data. Moreover, as mentioned previously, there are embodiments which also take account of the state of the occupants (tiredness, heart rate, breathing rate, temperature, etc.) and also their preferences (sport driving, driving to relax, etc.) in order to determine the optimal operating parameters for each section -2A-, -2B-, -2C-, -2D-, -2E-, -2F- of road. This type of more advanced and complete embodiment is especially advantageous for use in combination with autonomous vehicles or vehicles having a high degree of driver assistance, although it is also possible to use said type of embodiment with conventional vehicles.

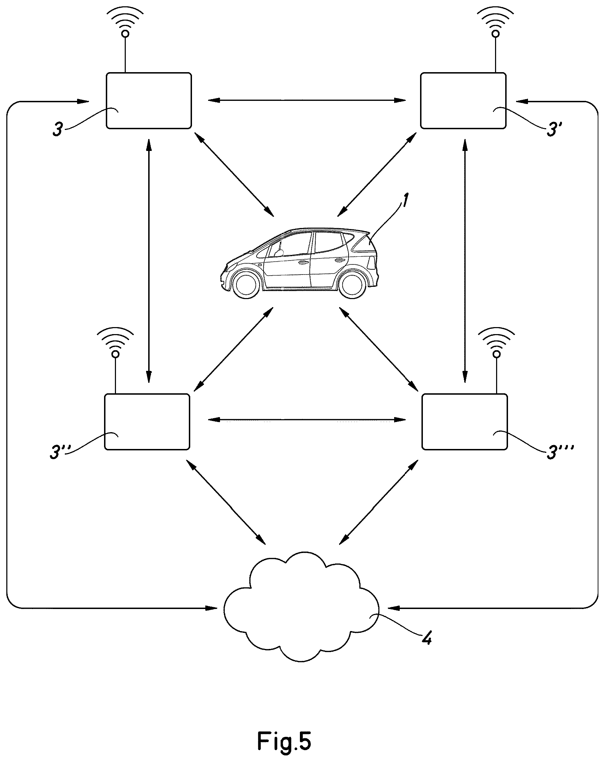

Fig. 5 schematically shows the operation of the third embodiment shown in Fig. 3. This figure shows how the different road-section control units -3-, -3'-, -3"-, -3‴- are interconnected so as to form a local area network. In the embodiment shown, communication between the different control units -3-, -3'-, -3"-, -3‴-of the different road sections is bidirectional. As can be seen, the control units -3-, -3'-, -3"-, -3‴-communicate with the vehicle -1- such that the control module embedded in said vehicle (not shown in this figure) adjusts the operating parameters of the vehicle to the state of the road. This figure also shows how the road-section control units are connected to the external server -4- or cloud, which, in this embodiment, is responsible for running the hypervisor algorithm.

To aid understanding and reduce the complexity of the operation diagram, the smart cells have not been shown in Fig. 5. As explained above, it should be understood that said smart cells communicate with the control units -3-, -3'-, -3"-, -3"'- and with the vehicle, or more specifically, with the control module embedded therein (not shown in this figure).

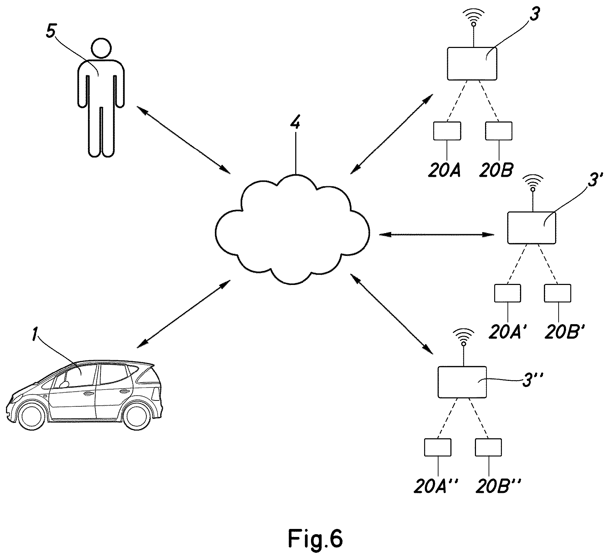

Fig. 6 schematically shows the operation of a fourth embodiment of a vehicle control system according to the present invention. In this embodiment, in addition to the global safety factor calculated in the road-section control units -3-, -3'-, -3"- based on the state of the road surface transmitted by the smart cells -20A-, -20B-, -20A'-, -20B'-, -20A"-, -20B"-, the system also considers the state and/or preferences of the user -5- with a view to determining the operating parameters of the vehicle -1-. The user -5- may be the driver of the vehicle -1-, the co-driver, the passengers or all of these. In this embodiment, the user -5- can receive warnings of upcoming dangers. In this embodiment, the system, in addition to ensuring the safety of the occupants of the vehicle, can also ensure the comfort of said occupants. For this purpose, the vehicle and the system have access to the sensors that provide biometric information on said occupants and to the stored preferences of said occupants.

In Fig. 1 to 3, for illustrative purposes, the smart cell -20- has been shown on the surface of the road -2-, whereas, in reality, said smart cell is preferably embedded in the road surface -2-.

All of the information transmission operations shown in the previous figures, be they wired or wireless, can be carried out in an encrypted manner, such that no one can intercept and/or modify the information transmitted. This is especially relevant since the information transmitted will be important with regard to road safety and, as a result, the safety of the people.

Although the embodiments shown in the previous figures evaluate the state of the road surface based on the coefficient of transverse friction (CTF) and the International Roughness Index (IRI) of one section of said road, consideration of the International Friction Index (IFI) of said road section is also possible. Although the accuracy of the system would decrease, embodiments that only consider one of the previously mentioned parameters are possible, i.e. they either consider only the CTF or they only consider the IRI or they only consider the IFI. The system according to the present invention can also be used with other standardised parameters relating to the state of the uppermost portion of the road surface or wearing course of the road.

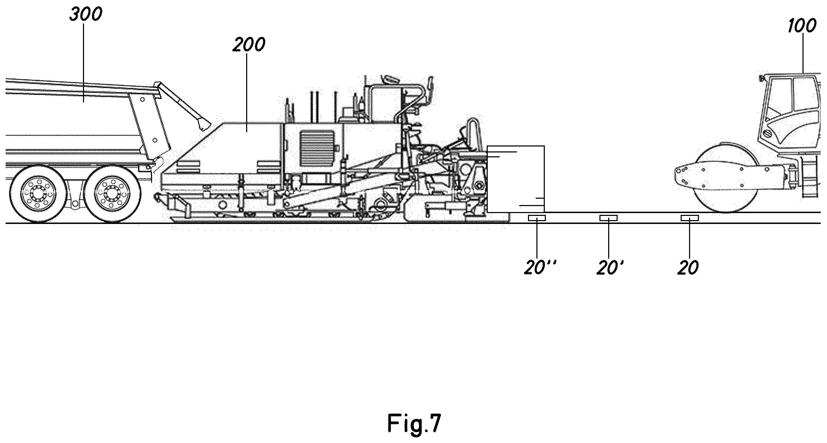

Fig. 7 is a schematic view of a first method for placing the smart cells in the surface of a road according to the present invention. This method consists in embedding the smart cells -20-, -20'-, -20"- in the road surface during asphalting thereof. For this purpose, the hot-mixture paver -200- comprises a mechanical insertion arm that inserts the smart cell into the asphalt or bituminous mixture after the paver -200- and before the roller -100-. When the roller passes over the smart cells -20-, -20'-, -20"-, the asphalt or bituminous mixture is perfectly compacted and smoothed and the smart cells -20-, -20'-, -20"- remain in their respective locations. It is important to note that, due to the temperatures of the asphalt or bituminous mixture after passing through the paver -200-, and due to the pressure exerted on said asphalt or bituminous mixture by the roller -100- passing thereover, the smart cells -20-, -20'-, -20"- must be made of materials that are resistant to heat (150 °C - 200 °C approximately) and chemicals and that have an adequate mechanical strength. In the embodiment shown in this figure, the smart cells are coated in a thermoset plastic.

The reference numeral -300- indicates the dump truck, which is responsible for supplying the bituminous mixture or asphalt to the paver -200-.

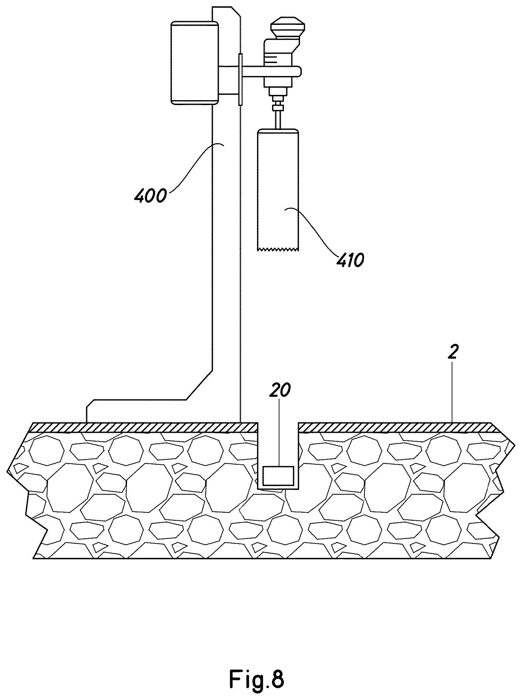

Fig. 8 is a schematic view of a second method for placing the smart cells in the road surface. Said second placement method is specially conceived for existing roads which, because the asphalt in still in good condition or for other technical and/or economic reasons, do not need to be re-asphalted. In this case, a rotary probe -400- is provided which makes a hole in the surface of the existing road -2- by means of a cylindrical cutting tool -410-. The depth of said hole is such that it does not impede the transmission of information from the smart cell -20- to the vehicle and the other previously described elements making up the system. Once the smart cell -20- has been placed in the appropriate position, the hole is covered with a cold or hot asphaltic mixture, depending on availability and the specific circumstances of each case.

In the figures shown, the wearing course of the road -2- is made of hot bituminous mixture (or hot mix asphalt, HMA). However, other embodiments in which said wearing course is made of bituminous mixtures other than asphalt, cement, concrete or other materials suitable for paving roads are also possible.

Although the smart cells are embedded in asphalt in the embodiments shown in the previous figures, other embodiments in which the smart cells are arranged close to the wearing course of the road, in locations such as road markings, the roadside, road signs, etc., are also possible. In order to secure the smart cells to the road signs, roadside, etc., both permanent and non-permanent securing means can be used.

## Claims

1. Vehicle control system comprising:
- a control module (10) comprised in a vehicle (1),
- a smart cell (20, 20A, 20B, 20A', 20B', 20A", 20B", 20', 20") that is capable transmitting information on the state of the road surface, the smart cell being located at a fixed point with respect to said road surface
the control module (10) of the vehicle modifying the operating parameters of said vehicle based on the information transmitted by the smart cell,
**characterised in that** the smart cell stores said information, said information being standardised information comprising the coefficient of transverse friction, CTF, the International Roughness Index, IRI, and/or the International Friction Index, IFI, previously measured during construction, maintenance work or during auscultation and maintenance campaigns.

2. System according to the preceding claim, wherein said stored information is periodically updated by means of ground or aerial means equipped with an information transmission unit.

3. System, according to anyone of the preceding claims, **characterised in that** the smart cell transmits the CTF, the IRI and/or the IFI.

4. System according to any of the preceding claims, **characterised in that** it calculates a global safety factor, which is a function of the coefficient of friction, the International Roughness Index, the position and the time the control module comprised in said vehicle modifying the operating parameters of said vehicle depending on said global safety factor and the system generating a warning sent to a vehicle while driving on a road section if the risk of accident increases as indicated by the global safety factor, the CTF, IRI and/or IFI.

5. System according to any one of the preceding claims, **characterised in that** it additionally comprises a control unit (3, 3', 3", 3‴) for a section of road.

6. System according to claim 4, **characterised in that** a control unit is provided for each of a plurality of road sections.

7. System according to any one of the preceding claims, **characterised in that** it additionally comprises an external server (4) that runs a machine learning algorithm based on the historical data for the calculation of the global safety factor.

8. System according to any one of the preceding claims, **characterised in that** the global safety factor is calculated in the smart cell.

9. System according to any one of claims 1 to 7, **characterised in that** the global safety factor is calculated in a control unit of a section of road.

10. System according to either claim 6 or claim 9, **characterised in that** a smart cell is provided for each of the sections of road.

11. System according to either claim 6 or claim 9, **characterised in that** a global safety factor is calculated for each of the sections of road.

12. System according to any one of the preceding claims, **characterised in that** the control module of the vehicle additionally considers the state of the occupants and the state of the vehicle in order to modify the operating parameters of the vehicle.

13. System according to any one of the preceding claims, **characterised in that** said smart cell is embedded in the asphalt.

14. Method for placing at least one smart cell belonging to a system according to claim 13, **characterised in that** said method comprises the steps of:
- laying the asphalt or bituminous mixture,
- inserting at least one smart cell (20, 20', 20") into the asphalt or bituminous mixture,
- compacting the asphalt or bituminous mixture having the at least one smart cell inside.

15. Method for placing at least one smart cell belonging to a system according to claim 13, **characterised in that** said method comprises the steps of:
- making at least one hole in the surface of the road (2),
- inserting a corresponding smart cell (20) in the at least one hole,
- covering the at least one hole having the smart cell inside with an asphaltic mixture.

## Patentansprüche

1. Fahrzeug-Steuersystem, umfassend:
- ein Steuermodul (10), das in einem Fahrzeug (1) enthalten ist, und
- eine intelligente Zelle (20, 20A, 20B, 20A', 20B', 20A", 20B", 20', 20"), die befähigt ist zum Senden von Informationen über den Zustand einer Straßenoberfläche, wobei die intelligente Zelle an einem fixen Punkt in Bezug auf die Straßenoberfläche angeordnet ist,
wobei das Steuermodul (10) des Fahrzeugs Betriebsparameter des Fahrzeugs basierend auf den durch die intelligente Zelle gesendeten Informationen modifiziert,
**dadurch gekennzeichnet, dass** die intelligente Zelle die Informationen speichert, wobei die Informationen standardisierte Informationen sind, die den Querreibungskoeffizienten (Coefficient of Transverse Friction bzw. CTF), den internationalen Rauigkeitsindex (International Roughness Index bzw. IRI) und/oder den internationalen Reibungsindex (International Friction Index (IFI), die zuvor während Bau- bzw. Wartungsarbeiten oder während Akustikmess- und Wartungsvorgängen gemessen wurden, umfassen.

2. System gemäß dem vorstehenden Anspruch, wobei die gespeicherten Informationen periodisch durch Boden- oder Lufteinrichtungen, die mit einer Informationen-Sendeeinheit ausgestattet sind, aktualisiert werden.

3. System nach einem der vorstehenden Ansprüche, **dadurch gekennzeichnet, dass** die intelligente Zelle den CTF, den IRI und/oder den IFI sendet.

4. System nach einem der vorstehenden Ansprüche, **dadurch gekennzeichnet, dass** das System einen globalen Sicherheitsfaktor berechnet, der eine Funktion des Reibungskoeffizienten, des internationalen Rauigkeitsindex, der Position und der Zeit ist, wobei das Steuermodul in dem Fahrzeug die Betriebsparameter des Fahrzeugs in Abhängigkeit von dem globalen Sicherheitsfaktor modifiziert und das System eine Warnung erzeugt, die an ein auf einem Straßenabschnitt fahrendes Fahrzeug gesendet wird, wenn das Risiko eines Unfalls wie durch den globalen Sicherheitsfaktor, den CTF, den IRI und/oder den IFI angegeben, erhöht ist.

5. System nach einem der vorstehenden Ansprüche, **dadurch gekennzeichnet, dass** dieses weiterhin eine Steuereinheit (3, 3', 3", 3‴) für einen Straßenabschnitt umfasst.

6. System nach Anspruch 4, **dadurch gekennzeichnet, dass** eine Steuereinheit für jeden aus einer Vielzahl von Straßenabschnitten vorgesehen ist.

7. System nach einem der vorstehenden Ansprüche, **dadurch gekennzeichnet, dass** dieses weiterhin einen externen Server (4) umfasst, der einen Maschinelles-Lernprogramm-Algorithmus basierend auf den historischen Daten für die Berechnung des globalen Sicherheitsfaktors ausführt.

8. System nach einem der vorstehenden Ansprüche, **dadurch gekennzeichnet, dass** der globale Sicherheitsfaktor in der intelligenten Zelle berechnet wird.

9. System nach einem der Ansprüche 1 bis 7, **dadurch gekennzeichnet, dass** der globale Sicherheitsfaktor in einer Steuereinheit eines Straßenabschnitts berechnet wird.

10. System nach Anspruch 6 oder Anspruch 9, **dadurch gekennzeichnet, dass** eine intelligente Zelle für jeden der Straßenabschnitte vorgesehen ist.

11. System nach Anspruch 6 oder Anspruch 9, **dadurch gekennzeichnet, dass** ein globaler Sicherheitsfaktor für jeden der Straßenabschnitte berechnet wird.

12. System nach einem der vorstehenden Ansprüche, **dadurch gekennzeichnet, dass** das Steuermodul des Fahrzeugs zusätzlich den Zustand der Insassen und den Zustand des Fahrzeugs beim Modifizieren der Betriebsparameter des Fahrzeugs berücksichtigt.

13. System nach einem der vorstehenden Ansprüche, **dadurch gekennzeichnet, dass** die intelligente Zelle im Asphalt eingebettet ist.

14. Verfahren zum Platzieren wenigstens einer intelligenten Zelle, die zu einem System gemäß Anspruch 13 gehört, **dadurch gekennzeichnet, dass** das Verfahren die folgenden Schritte umfasst:
- Auftragen eines Asphalts oder einer bituminösen Mischung,
- Einfügen wenigstens einer intelligenten Zelle (20, 20', 20") in den Asphalt oder die bituminöse Mischung
- Verdichten des Asphalts oder der bituminösen Mischung mit der darin enthaltenen wenigstens einen intelligenten Zelle.

15. Verfahren zum Platzieren wenigstens einer intelligenten Zelle, die zu einem System gemäß Anspruch 13 gehört, **dadurch gekennzeichnet, dass** das Verfahren die folgenden Schritte umfasst:
- Ausbilden wenigstens eines Lochs in der Oberfläche der Straße (2),
- Einfügen einer entsprechenden intelligenten Zelle (20) in das wenigstens eine Loch,
- Bedecken des wenigstens einen Lochs mit der darin enthaltenen intelligenten Zelle mit einer Asphaltmischung.

## Revendications

1. Système de commande de véhicule comprenant :
- un module de commande (10) intégré dans un véhicule (1),
- une cellule intelligente (20, 20A, 20B, 20A', 20B', 20A", 20B", 20', 20") qui est capable de transmettre des informations sur l'état de la chaussée, la cellule intelligente étant située à un point fixe par rapport à ladite chaussée
le module de commande (10) du véhicule modifie les paramètres de fonctionnement dudit véhicule sur la base des informations transmises par la cellule intelligente,
**caractérisé en ce que** la cellule intelligente stocke lesdites informations, lesdites informations étant des informations normalisées comprenant le coefficient de frottement transversal, CTF,
l'indice de rugosité international, IRI, et/ou l'indice de frottement international, IFI, préalablement mesurés lors de travaux de construction, d'entretien ou lors de campagnes d'auscultation et d'entretien.

2. Système selon la revendication précédente, dans lequel lesdites informations stockées sont périodiquement mises à jour à l'aide de moyens terrestres ou aériens équipés d'une unité de transmission d'informations.

3. Système selon l'une quelconque des revendications précédentes, **caractérisé en ce que** la cellule intelligente transmet le CTF, l'IRI et/ou l'IFI.

4. Système selon l'une quelconque des revendications précédentes, **caractérisé en ce qu'**il calcule un facteur de sécurité global, qui est une fonction du coefficient de frottement, de l'indice de rugosité international, de la position et du temps, le module de commande compris dans ledit véhicule modifiant les paramètres de fonctionnement dudit véhicule en fonction dudit facteur de sécurité global et le système générant un avertissement envoyé à un véhicule en train de rouler sur un tronçon de route si le risque d'accident augmente comme indiqué par le facteur de sécurité global, le CTF, l'IRI et/ou l'IFI.

5. Système selon l'une quelconque des revendications précédentes, **caractérisé en ce qu'**il comprend en outre une unité de commande (3, 3', 3", 3"') pour un tronçon de route.

6. Système selon la revendication 4, **caractérisé en ce qu'**une unité de commande est prévue pour chacun de la pluralité de tronçons de route.

7. Système selon l'une quelconque des revendications précédentes, **caractérisé en ce qu'**il comprend en outre un serveur externe (4) qui exécute un algorithme d'apprentissage automatique basé sur les données historiques pour le calcul du facteur de sécurité global.

8. Système selon l'une quelconque des revendications précédentes, **caractérisé en ce que** le facteur de sécurité global est calculé dans la cellule intelligente.

9. Système selon l'une des revendications 1 à 7, **caractérisé en ce que** le facteur de sécurité global est calculé dans une unité de commande d'un tronçon de route.

10. Système selon la revendication 6 ou la revendication 9, **caractérisé en ce qu'**une cellule intelligente est fournie pour chacun des tronçons de route.

11. Système selon la revendication 6 ou la revendication 9, **caractérisé par le fait qu'**un facteur de sécurité global est calculé pour chacun des tronçons de route.

12. Système selon l'une quelconque des revendications précédentes, **caractérisé en ce que** le module de commande du véhicule considère en outre l'état des occupants et l'état du véhicule afin de modifier les paramètres de fonctionnement du véhicule.

13. Système selon l'une quelconque des revendications précédentes, **caractérisé en ce que** ladite cellule intelligente est intégrée dans l'asphalte.

14. Procédé de mise en place d'au moins une cellule intelligente appartenant à un système selon la revendication 13, **caractérisé en ce que** ledit procédé comprend les étapes consistant à :
- poser l'asphalte ou le mélange bitumineux,
- insérer au moins une cellule intelligente (20, 20', 20") dans l'asphalte ou le mélange bitumineux,
- compacter l'asphalte ou le mélange bitumineux dans lequel se trouve au moins une cellule intelligente.

15. Procédé de mise en place d'au moins une cellule intelligente appartenant à un système selon la revendication 13, **caractérisé en ce que** ledit procédé comprend les étapes consistant à :
- faire au moins un trou dans la surface de la route (2),
- insérer une cellule intelligente correspondante (20) dans ledit au moins un trou,
- recouvrir ledit au moins un trou ayant la cellule intelligente à l'intérieur avec un mélange asphaltique.
